# EUROPÄISCHE PATENTSCHRIFT

(11) **EP 2 477 859 B1**
(45) Veröffentlichungstag und Bekanntmachung des Hinweises auf die Patenterteilung: **18.06.2014**
(21) Anmeldenummer: 10752826.7
(22) Anmeldetag: 15.09.2010
(51) Int. Cl.: B60T 11/26

(54) **BEHÄLTER, INSBESONDERE FÜR HYDRAULISCHE FAHRZEUGBREMSANLAGEN**
CONTAINER, PARTICULARLY FOR HYDRAULIC VEHICLE BRAKE SYSTEMS
RÉCIPIENT, EN PARTICULIER POUR SYSTÈMES DE FREINAGE HYDRAULIQUE POUR VÉHICULES

(30) Priorität: 16.09.2009 DE 102009029509; 26.01.2010 DE 102010001216
(43) Veröffentlichungstag der Anmeldung: 25.07.2012
(73) Patentinhaber: Continental Teves AG & Co. oHG, 60488 Frankfurt (DE)
(72) Erfinder: TANDLER, Peter, 61476 Kronberg/Ts. (DE); KREBS, Werner, 65582 Hambach (DE); SCHLICHT, Stephan, 64569 Nauheim (DE); NEUMNANN, Hans-Jürgen, 65428 Rüsselsheim (DE); SCHIEL, Christoph, 61231 Bad Nauheim (DE); HIRAGA, Yoji, Yokohama-City Kanagawa 232-0071 (JP)
(74) Vertreter: Höer, Daniela
(86) Internationale Anmeldenummer: PCT/EP2010/063517
(87) Internationale Veröffentlichungsnummer: WO 2011/032963

(56) Entgegenhaltungen:
- DE-A1- 2 834 789
- DE-A1- 10 310 170
- DE-A1- 19 625 340
- FR-A1- 2 841 610
- FR-A1- 2 874 879
- GB-A- 2 010 426
- US-A- 5 957 545

## Beschreibung

Die Erfindung betrifft einen Behälter, insbesondere für hydraulische Kraftfahrzeugbremsanlagen, mit einer oder mehreren Druckmittelkammern, einem Einfüllstutzen zum Füllen des Behälters mit Druckmittel und einem mit dem Einfüllstutzen verbundenem Druckmitteldurchlass, welcher eine in die Druckmittelkammer hineinweisende Öffnung aufweist.

Aufgrund von geänderten Einbauräumen in den Kraftfahrzeugen werden die Druckmittelbehälter eines Kraftfahrzeuges immer länger bzw. werden teuere Füll- und Hauptbremszylinder-Behälter (so genannte Remote-Systeme mit zwei Behältern) mit Schlauchverbindungen und Kupplungen erforderlich.

Normalerweise wird der Einfüllstutzen am Behälter in Fahrtrichtung ganz vorne angebracht, da nur hier aufgrund der geänderten Einbauräume bzw. aufgrund des Packagings der Einfüllstutzen angesetzt werden kann. Hierbei ist allerdings von Nachteil, dass es bei verschiedenen Fahrzuständen (z.B. Abbremsen, Bergfahrt, Kurvenfahrt) zum Austritt von Druckmittel über eine Verschlusskappe oder einen Behälterdeckel des Behälters kommen kann.

Aus der DE 197 38 334 A1 ist ein gattungsgemäßer Behälter bekannt, welcher diese Problematik zu lösen versucht. Ein Druckmitteldurchlass ist in dem Behälter vorgesehen und dient dazu, eine Leckage des Druckmittels über den Einfüllstutzen zu vermeiden. Hierzu weist der Behälter einen in der Druckmittelkammer eingeformten, mit dem Behälter einteilig vorgesehenen Druckmittelkanal auf. Als nachteilig wird dabei angesehen, dass die Herstellung des so ausgestalteten Behälters sehr aufwendig und damit mit hohen Kosten verbunden ist. Ein alternatives Ausführungsbeispiel sieht vor, dass der Druckmitteldurchlass durch ein separates, in den Behälter einlegbares Bauteil gebildet wird, wobei ein zusätzlich benötigtes Bauteil ebenfalls als nachteilig angesehen wird.

Aus Kosten- und Einbaugründen müssen vermehrt lange und flache Behälter eingesetzt werden.

Ein weiterer gattungsgemäßer Behälter ist ebenfalls aus der FR 2 874 879 A1 bekannt.

Daher ist es Aufgabe der Erfindung einen gattungsgemäßen Behälter bereitzustellen, welcher die Leckage des Druckmittels bei extremen Lagen des Fahrzeuges sicher verhindert und der gleichzeitig einfach und kostengünstig herstellbar ist.

Diese Aufgabe wird erfindungsgemäß dadurch gelöst, dass der Druckmitteldurchlass als seitlicher Kanal vorgesehen ist, welcher sich ausgehend von dem Einfüllstutzen in Längsrichtung entlang dem Behälter erstreckt und durch Wände eines Oberteiles und eines Unterteiles des Behälters gebildet ist. Die Anordnung und Ausgestaltung des seitlichen Kanals ermöglicht eine einfache und kostengünstige Herstellung des Behälters ohne zusätzliche Bauteile.

Weitere Merkmale, Vorteile und Anwendungsmöglichkeiten der Erfindung gehen aus den Unteransprüchen und der nachfolgenden Beschreibung einer Ausführungsform sowie anhand der Zeichnung hervor. Dabei zeigt jeweils stark schematisiert sowie teilweise im Schnitt:
- Fig. 1: ein Längsschnitt eines erfindungsgemäßen Behälters;
- Fig. 2: eine Draufsicht auf ein Oberteil des Behälters gemäß Fig. 1;
- Fig. 3: eine Draufsicht auf ein Unterteils des Behälters gemäß Fig. 1;
- Fig. 4: einen Querschnitt des Unterteils gemäß Fig. 3 und
- Fig. 5: eine Seitenansicht des Unterteils gemäß Fig. 3.

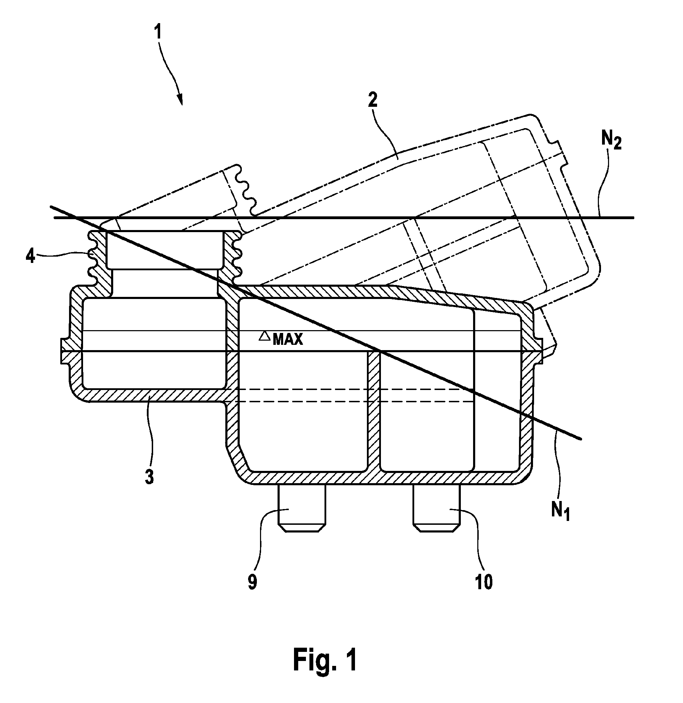

Den Fig. 1 bis 5 ist ein erfindungsgemäßer Behälter 1 für eine hydraulische Kraftfahrzeugbremsanlage zu entnehmen. Die grundsätzliche Funktion sowie der grundsätzliche Aufbau des Behälters 1 sind bekannt. Daher wird nachfolgend lediglich auf die erfindungswesentlichen Merkmale eingegangen.

Der Behälter 1 umfasst ein Oberteil 2 und ein Unterteil 3 aus Kunststoff und weist wenigstens eine Druckmittelkammer zur Bereitstellung von Druckmittel für die hydraulische Kraftfahrzeugbremsanlage auf, welche über einen Einfüllstutzen 4 mit Druckmittel befüllbar ist. Ein nicht gezeigter Behälterdeckel verschließt den Einfüllstutzen 4 beispielsweise mittels einer Gewindeverbindung.

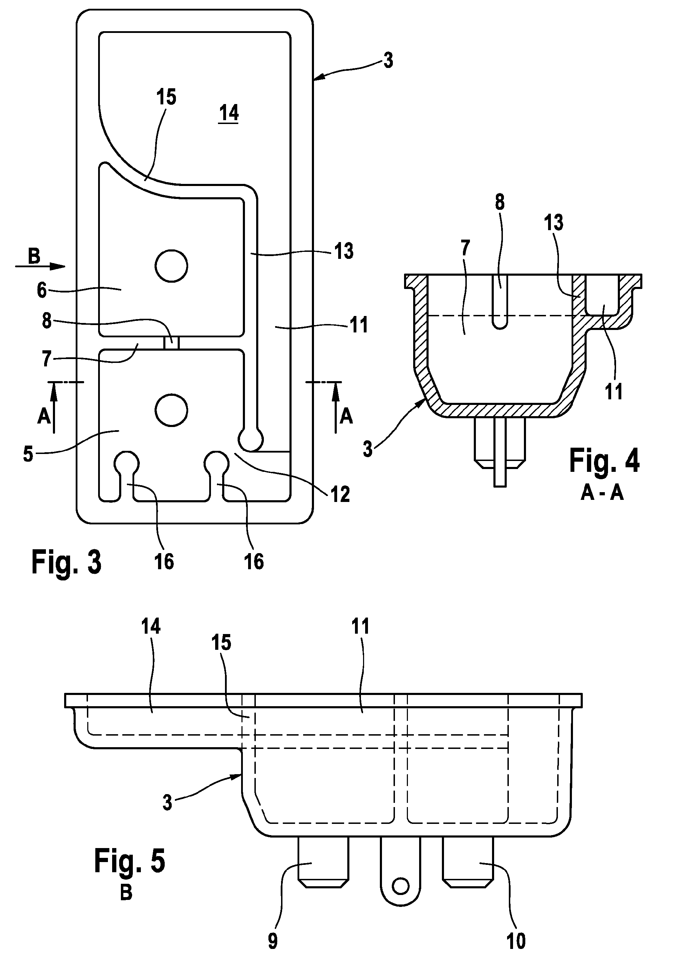

Wie aus der in Fig. 3 dargestellten Draufsicht des Unterteils 3 zu erkennen ist, sind bei dem gezeigten Ausführungsbeispiel zwei Druckmittelkammern 5,6 vorgesehen, welche über Befestigungsansätze 9,10 das Druckmittel für Druckkammern eines nicht gezeigten Tandemhauptbremszylinder bereitstellen. Die Druckmittelkammern 5,6 sind durch eine Trennwand 7 voneinander abgetrennt, wobei eine Öffnung 8 in der Trennwand 7 für einen Druckmittelausgleich sorgt und gleichzeitig ein gesetzliches Restvolumen in den beiden Druckmittelkammer 5,6 sicherstellt.

Für die Funktion des Behälters 1 ist es notwendig, dass die Druckmittelkammern 5,6 drucklos sind, d.h. dass Volumenänderungen des Druckmittels innerhalb der Bremsanlage, welche beispielsweise durch Druckmittelverlust oder Temperaturänderungen des Druckmittels auftreten können, durch einen Luftaustausch ausgeglichen werden können. Hierzu weist der Behälterdeckel Mittel zum Druckausgleich zwischen den Druckmittelkammern 5,6 und der Atmosphäre auf. Bei Extremlagen des Fahrzeuges, beispielsweise bei einer Bremsung oder bei einer länger andauernden Schrägstellung des Fahrzeuges bei einer Gefällefahrt, kann die Dichtheit des Behälters 1 jedoch durch die Mittel zum Druckausgleich nicht gewährleistet werden.

Fig. 1 zeigt einen Längsschnitt des Behälters 1. Das Druckmittelniveau befindet sich bei stillstehendem Fahrzeug höchstens auf Höhe der Max-Marke. Bei einer Abbremsung des Fahrzeuges schwappt das Druckmittel jedoch in Fahrtrichtung, wie durch die Linie N₁ angedeutet ist, und überspült den Einfüllstutzen 4, so dass das Druckmittel aus dem Behälter 1 herausdringen kann. Weiter ist in Fig. 1 eine Stellung des Behälters 1 bei einer Gefällefahrt angedeutet. Es ist ersichtlich, dass auch hierbei das Druckmittel, angedeutet durch die Linie N₂, über den Einfüllstutzen 4 und dem Behälterdeckel herausdringen kann.

Zur Lösung dieser Problematik ist es bekannt, einen mit dem Einfüllstutzen verbundenen Druckmitteldurchlass in dem Behälter vorzusehen, welcher dazu dient, eine Leckage des Druckmittels über den Einfüllstutzen zu vermeiden. Hierzu weist der bekannte Behälter einen in der Druckmittelkammer eingeformten, mit dem Behälter einteilig vorgesehenen Druckmittelkanal oder einen als separates, in den Behälter einlegbares Bauteil vorgesehenen Druckmittelkanal auf.

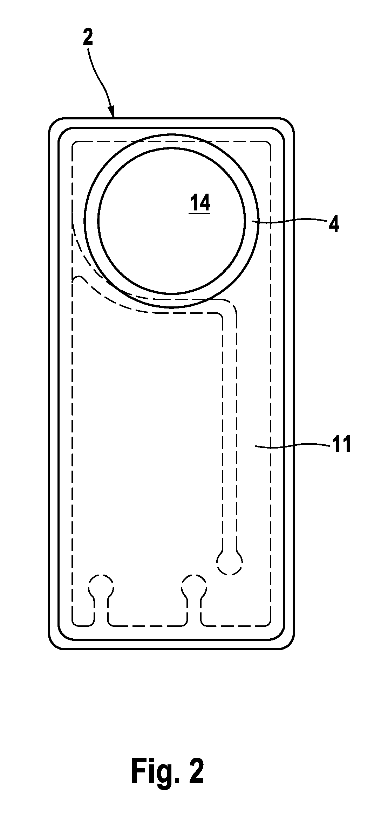

Um dagegen einen Behälter bereitzustellen, welcher die Leckage des Druckmittels bei extremen Lagen des Fahrzeuges sicher verhindert und der gleichzeitig einfach und kostengünstig herstellbar ist, weist nun der erfindungsgemäße Behälter 1 einen mit dem Einfüllstutzen 4 verbundenen Druckmitteldurchlass 11 auf. Wie den Fig. 2 und 3, welche Draufsichten des Ober- und des Unterteils 2,3 zeigen, zu entnehmen ist, ist der Druckmitteldurchlass 11 als seitlicher Kanal vorgesehen und weist eine in die Druckmittelkammer 5 hineinweisende Öffnung 12 auf. Ferner erstreckt sich der Druckmitteldurchlass 11 ausgehend von dem Einfüllstutzen 4 in Längsrichtung entlang des Behälters 1 und ist durch Wände des Ober- und Unterteils 2,3 gebildet, so dass eine einfache Herstellung durch eine einfache Entformung der beiden Behälterteile 2,3 möglich ist.

Den Fig. 4 und 5 sind weitere Ansichten des Unterteils 3 zu entnehmen. Fig. 4 zeigt einen Querschnitt entlang der Ebene A-A durch das in Fig. 3 gezeigte Unterteil 3. Insbesondere hieraus ist deutlich zu erkennen, dass der Kanal 11 seitlich versetzt zu den Druckmittelkammern 5,6 angeordnet ist, so dass eine Außenwand 13 des Unterteils 3 eine innere Wand des Kanals 11 bildet. Eine entsprechende Ausgestaltung ist für das Oberteil 2 vorgesehen, so dass der Kanal 11 nach dem Zusammenfügen von Ober- und Unterteil 2,3 z.B. durch Ultraschallschweißen vollständig gebildet wird.

Fig. 5 zeigt eine Seitenansicht des Unterteils 3 aus der in Fig. 3 angedeuteten Richtung B. Hieraus sowie aus Fig. 1 ist zu entnehmen, dass auch der Einfüllstutzen 4 versetzt zu den Druckmittelkammern 5,6 angeordnet vorgesehen ist. Im Unterschied zu dem Druckmitteldurchlass 11 ist der Einfüllstutzen 4 aber in Längsrichtung versetzt.

Ein durch eine Innenwand 15 abgetrennter Bereich 14 unterhalb des Einfüllstutzens 4 bildet den Anfang des Kanals 11, so dass das Einfüllen von Druckmittel über den Einfüllstutzen 4 nicht durch eine Verengung in diesem Bereich behindert wird.

Ferner sind im Bereich der Druckmittelkammer 5 Innenwände 16 zur Stabilisierung des Behälters 1 vorgesehen sind.

### Bezugszeichenliste:

- 1: Behälter
- 2: Oberteil
- 3: Unterteil
- 4: Einfüllstutzen
- 5: Druckmittelkammer
- 6: Druckmittelkammer
- 7: Trennwand
- 8: Öffnung
- 9: Befestigungsansatz
- 10: Befestigungsansatz
- 11: Druckmitteldurchlass
- 12: Öffnung
- 13: Außenwand
- 14: Beeich
- 15: Innenwand
- 16: Innenwand

## Patentansprüche

1. Behälter (1), insbesondere für hydraulische Kraftfahrzeugbremsanlagen, mit einer oder mehreren Druckmittelkammern (5,6), einem Einfüllstutzen (4) zum Füllen des Behälters (1) mit Druckmittel und einem mit dem Einfüllstutzen (4) verbundenem Druckmitteldurchlass (11), welcher eine in die Druckmittelkammer (5) hineinweisende Öffnung (12) aufweist, wobei der Druckmitteldurchlass (11) als seitlicher Kanal vorgesehen ist, welcher sich ausgehend von dem Einfüllstutzen (4) in Längsrichtung entlang des Behälters (1) erstreckt und durch Wände eines Oberteiles (2) und eines Unterteiles (3) des Behälters (1) gebildet ist, **dadurch gekennzeichnet, dass** der Kanal seitlich versetzt zu den Druckmittelkammern (5,6) angeordnet vorgesehen ist.

2. Behälter (1) nach Anspruch 1, **dadurch gekennzeichnet, dass** eine Außenwand (13) des Unterteils (3) eine innere Wand des Kanals bildet.

3. Behälter (1) nach einem der Ansprüche 1 bis 2, **dadurch gekennzeichnet, dass** der Einfüllstutzen (4) in Längsrichtung versetzt zu den Druckmittelkammern (5,6) angeordnet vorgesehen ist und ein Anfang des Kanals unterhalb des Einfüllstutzens (4) ausgebildet ist.

4. Behälter (1) nach einem der vorangegangenen Ansprüche 1 bis 3, **dadurch gekennzeichnet, dass** Innenwände (16) zur Stabilisierung des Behälters vorgesehen sind.

## Claims

1. Reservoir (1), in particular for hydraulic motor vehicle brake systems, having one or more pressure medium chambers (5, 6), a filler neck (4) for filling the reservoir (1) with pressure medium and a pressure medium passage (11), which is connected to the filler neck (4) and has an opening (12) facing the pressure medium chamber (5), the pressure medium passage (11) being provided as a lateral channel which extends in the longitudinal direction along the reservoir (1), starting from the filler neck (4), and is formed by walls of an upper part (2) and of a lower part (3) of the reservoir (1), **characterized in that** the channel is provided in such a way as to be arranged laterally offset with respect to the pressure medium chambers (5, 6).

2. Reservoir (1) according to Claim 1, **characterized in that** an outer wall (13) of the lower part (3) forms an inner wall of the channel.

3. Reservoir (1) according to one of Claims 1 to 2, **characterized in that** the filler neck (4) is provided in such a way as to be arranged offset in the longitudinal direction with respect to the pressure medium chambers (5, 6), and a start of the channel is formed below the filler neck (4).

4. Reservoir (1) according to one of preceding Claims 1 to 3, **characterized in that** inner walls (16) are provided to stabilize the reservoir.

## Revendications

1. Récipient (1), en particulier pour systèmes de freinage hydrauliques de véhicules automobiles, comprenant une ou plusieurs chambres de fluide sous pression (5, 6), une tubulure de remplissage (4) pour remplir de fluide sous pression le récipient (1) et un passage de fluide sous pression (11) relié à la tubulure de remplissage (4), lequel passage de fluide sous pression comprend une ouverture (12) tournée vers la chambre de fluide sous pression (5), le passage de fluide sous pression (11) étant prévu en tant que canal latéral, lequel s'étend, à partir de la tubulure de remplissage (4), dans la direction longitudinale le long du récipient (1) et est formé par des parois d'une partie supérieure (2) et d'une partie inférieure (3) du récipient (1), **caractérisé en ce que** le canal est prévu de manière à être décalé latéralement par rapport aux chambres de fluide sous pression (5, 6).

2. Récipient (1) selon la revendication 1, **caractérisé en ce qu'**une paroi extérieure (13) de la partie inférieure (3) forme une paroi intérieure du canal.

3. Récipient (1) selon l'une quelconque des revendications 1 et 2, **caractérisé en ce que** la tubulure de remplissage (4) est prévue de manière à être décalée dans la direction longitudinale par rapport aux chambres de fluide sous pression (5, 6) et un commencement du canal est réalisé en dessous de la tubulure de remplissage (4).

4. Récipient (1) selon l'une quelconque des revendications précédentes 1 à 3, **caractérisé en ce que** des parois intérieures (16) sont prévues en vue de la stabilisation du récipient.
